# EUROPÄISCHE PATENTSCHRIFT

(11) **EP 2 896 895 B1**
(45) Veröffentlichungstag und Bekanntmachung des Hinweises auf die Patenterteilung: **26.04.2017**
(21) Anmeldenummer: 15150150.9
(22) Anmeldetag: 06.01.2015
(51) Int. Cl.: F24D 19/10, G05D 23/19

(54) **Verfahren zur adaptiven Regelung eines Heizsystems**
Method for adaptive control of a heating system
Procédé de réglage adaptatif d'un système de chauffage

(30) Priorität: 20.01.2014 AT 500262014
(43) Veröffentlichungstag der Anmeldung: 22.07.2015
(73) Patentinhaber: Vaillant GmbH, 42859 Remscheid (DE)
(72) Erfinder: Heinen, Lars, 53123 Bonn (DE); Anger, Michael, 51061 Köln (DE); Spahn, Hans-Josef, 40699 Erkrath (DE)
(74) Vertreter: Hocker, Thomas

(56) Entgegenhaltungen:
- WO-A1-2004/083733

## Beschreibung

Die Erfindung betrifft ein Verfahren zur adaptiven Regelung eines Heizsystems.

Zur ganzjährigen Einhaltung von Komforttemperaturen in Gebäuden werden diese beheizt. Mit Hilfe von Wärmeverteilungs- und -übergabesystemen wird die Wärme von den Wärmeerzeugern in die einzelnen Räume transportiert. Die Aufgabe eines Regelungssystems zur Heizungsregelung liegt darin, festzustellen, wann die Wärmeerzeugung zur Erhaltung der Komforttemperaturen erfolgen muss und mit welcher Intensität. Für die Effizienz der Wärmeerzeuger ist entscheidend, wie der Wärmeerzeuger angefordert und geregelt wird. Eine weitere Aufgabe liegt darin, die Raumtemperatur für jeden Raum separat zu regeln, um Störungen (Sonneneinstrahlung, Fensteröffnungen, Türöffnung o.ä.) zu kompensieren.

Stand der Technik ist Einzelraumtemperaturreglung in Kombination mit der witterungsgeführten Vorlauftemperaturregelung. Die Einzelraumtemperaturreglung erfolgt mit Hilfe von konventionellen Thermostatköpfen, die z.B. direkt an einem Heizkörperventil angebracht sind oder mit Hilfe von elektronisch geregelte Einzelraumtemperaturregelsystemen mit motorischen Antrieben und digitalen Reglern.

Thermostatköpfe regeln durch Ausdehnungselemente den Volumenstrom und damit die Leistungsabgabe über die Wärmeübergabesysteme, in der Regel Heizkörper. Diese Regler arbeiten rein analog als P-Regler. Durch manuelles Verstellen eines Offsets kann die Temperatur im Raum erhöht und verringert werden. Wichtig ist dabei, dass diese Regelung nicht die Raumtemperatur garantieren kann, da sie stark abhängig ist von der Güte der Auslegung und Einstellung der Hydraulik durch den Fachhandwerker. Der Nutzer muss hier die Reglung selbst übernehmen. Häufig neigen die System zum Überschwingen. Aus diesem Grunde sind alternativ Systeme bekannt, die digital die Einzelraumtemperaturreglung realisieren. Dazu werden Temperatursensoren in den Räumen installiert, die Werte in einem Regler mit Sollwerten verglichen und Stellsignale an Heizkörperventilaktoren übermittelt, die die Leistungsabgabe der Heizkörper entsprechend regeln. Bekannte Regler sind 2-Punkt-Hystereseregler mit oder ohne Vorverlegung von Schaltpunkten und PID-Regler. Dabei ist bekannt, dass gerade PID-Regler schwierig zu parametrieren sind, vor allem derart, dass sie allgemeingültig für unterschiedliche Heizsysteme und Gebäudeschweren gelten. Dies führt ebenfalls zu thermisch schwingenden Raumtemperaturen. Den meisten ist gemein, dass sie rein die Einzelraumreglung realisieren, dabei aber keine Rückmeldung an den Wärmeerzeuger geben.

Parallel zu der Einzelraumregelung wird die Vorlauftemperatur witterungsgeführt. Dabei wird die Soll-Vorlauftemperatur in Abhängigkeit der Außentemperatur anhand eines vom Fachhandwerker eingestellten Parametersatzes fest vorgegeben. Ob dieser Parametersatz allerdings für den Wärmebedarf und des Wärmeverteilungs- und Wärmeübergabesystems des jeweiligen Gebäudes durch z.B. Berechnung oder Abschätzung, passt, wird nicht direkt transparent. Vielmehr zeigt sich erst nach einer gewissen Zeit, ob der Wärmeerzeuger zu viel (Gebäude-Überhitzung) oder zu wenig (Gebäude-Unterkühlung) Wärme bereit stellt. Der Kunde reklamiert ein nicht funktionierendes System. Fachhandwerker müssen nachjustieren. Dies erfolgt in den meisten Fällen durch Verstellen der Heizkurve zu höheren Sollvorlauftemperaturen und/ oder Erhöhung der Pumpendrehzahlen, um höhere Volumenströme zu generieren. Dabei wird die Systemtemperatur derart erhöht, dass die Unterkühlung in den kritischen Gebäudeteilen verhindert wird. In den anderen Gebäudeteilen steigt hingegen die Überhitzungsanfälligkeit bzw. die Sensibilität auf Eingriffe der installierten Einzelraumregelungen. Das Heizsystem neigt zum Schwingen. So wird das Minimum an Komforttemperatur sichergestellt, eine zufriedenstellende Effizienz und Regelgüte wird nicht erreicht.

Um diese Regelung zu verfeinern sind Systeme bekannt, die über repräsentative Führungsräume oder Führungszonen in der Lage sind, direkt die dortigen Ist-Temperaturen dazu zu verwenden, die Vorlauftemperatur in Maßen zu korrigieren. Bekannt sind dabei Probleme, dass der Führungsraum im Komforttemperaturbereich liegt, andere Räume, die vom gleichen Erzeuger versorgt werden, allerdings auskühlen.

Zudem beeinflussen mehrere Faktoren das Heizsystem sowie die Regelung der einzelnen Räume. Dies sind die Charakteristik des Wärmeerzeugers, die hydraulischen Randbedingungen, z.B. Heizkörperregelventilcharakteristik, hydraulischer Abgleich, die Art der Heizkörper sowie die Charakteristik, Nutzung und Ausstattung des Gebäudes.

Aus der Patentanmeldung EP 2354682 A2 ist ein Regelverfahren bekannt, in dem Räume mit einem erweiterten 2-Punktregler in Schwingungen versetzt werden, wobei klar in Beheizungs- und Auskühlteilzyklen unterschieden werden kann. Dabei liegt die Temperatur des Raums immer zwischen einer oberen und unteren Grenztemperatur (Hysteresegrenze). Durch rechtzeitiges Ab- oder Anschalten, durch Öffnen und Schließen des Heizkörperventilaktors am Wärmeübertrager, werden diese Temperaturgrenzen annähernd ohne Über- oder Unterschwinger eingehalten (2-Punkt-Hysterese-Regler mit adaptiver Vorverlegung von Schaltpunkten).

Dieses Verfahren hat jedoch den Nachteil, dass die Zyklen der einzelnen Räume nicht koordiniert sind. Für das Heizgerät hat dies zur Folge, dass abhängig von den einzelnen Frequenzen der Zyklen der der einzelnen Räume sowie der jeweils übertragene Wärmeleistung an jeden Raum die vom Heizgerät abgeforderte Wärmemenge stark schwankt. Dadurch ist es nicht möglich, das Heizgerät in einem besonders energieeffizienten Arbeitspunkt zu betreiben.

Aus der Patentanmeldung WO 2004/083733 A1 ist es bekannt, bei einem Heizsystem innerhalb einer definierten Zeitspanne einen spezifischen Werte für die Wärmeanforderung für jeden Heizkörper zu bestimmen, diesen mit den Werten aller anderen Heizkörper zu vergleichen und die Einstellung des Heizkörpers mit dem niedrigen spezifischen Wärmebedarf so zu verhindern, dass ein Wärmebedarf erhöht wird. Es ist daher Aufgabe der Erfindung, ein Verfahren zur Regelung eines Heizsystems bereitzustellen, das unter Einhaltung der vorteilhaften Regelung der einzelnen Räume die Ansteuerung des Heizgeräts hinsichtlich Effizienz adaptiv maximiert.

Diese Aufgabe wird erfindungsgemäß durch ein Verfahren zur adaptiven Regelung eines Heizsystems gemäß den Merkmalen des unabhängigen Anspruchs gelöst.

In dem erfindungsgemäßen Verfahren werden zyklisch mehrere Verfahrensschritte durchlaufen. Es wird zunächst davon ausgegangen, dass das Heizgerät keine Wärme erzeugt. Die einzelnen Räume weisen Temperatursensoren zum Messen der Raumtemperatur auf. Sobald einer der Räume eine Temperatur unterhalb eines unteren Schwellenwertes aufweist, sendet ein Steuergerät im Raum eine Anforderung von Wärme an das Heizgerät oder an eine übergeordnete Steuerung. Das Heizgerät liefert nun so lange Wärme, bis die Temperaturen aller Räume oberhalb eines oberen Schwellenwertes liegen, danach wird das Heizgerät wieder abgeschaltet. In den Räumen, in denen die Temperatur den oberen Schwellenwert erreicht haben, bevor das Heizgerät abgeschaltet wird, wird ein Stellventil, welches den Durchfluss des Wärmeträgermedium durch den Heizkörper steuert, geschlossen. Anschließend wird so lange gewartet, bis wieder einer der Räume Wärme anfordert. Diejenigen Räume, in denen die Temperatur den oberen Schwellenwert erreicht hat bevor das Heizgerät abgeschaltet wird, wurden mit zu viel Wärme versorgt. Daher in einem weiteren Verfahrensschritt der Öffnungsgrad des Stellventils im Schritt (b) in dem Maße reduziert, wie zu viel Wärme bereitgestellt wurde. Dadurch passen sich auch thermisch günstigere Räume durch das Reduzieren des Öffnungsgrads des Stellventils im Schritt (b) an den thermisch ungünstigsten Raum an. Dies hat zur Folge, dass die Aufheizperioden aller Räume gleich lang sind und somit synchron erfolgen. Dadurch kann ein Heizgerät, insbesondere ein Brennwert-Heizgerät in einem Betriebspunkt mit hoher Effizienz betrieben werden.

In einem Heizsystem ist eine niedrige Vorlauftemperatur besonders energieeffizient. Daher wird erfindungsgemäß die Leistung des Heizgeräts reduziert. Es hat sich herausgestellt, dass durch die adaptive Anpassung der Öffnungsgrade der Stellventile der thermisch günstigeren Räume eine besonders feinfühlige Regelung auch in einem kontinuierlichen Betrieb, wie er in Anspruch 6 bis 9 beschrieben ist, möglich ist. In diesem Zusammenhang ist darauf hinzuweisen, dass der kontinuierlichen Betrieb dadurch definiert ist, dass der Schritt (b) über einen längeren Zeitraum, beispielsweise einer halben bis zu mehreren Stunden, durchgeführt wird. Vorteilhafte Weiterbildungen werden durch die Merkmale der abhängigen Ansprüche beschrieben.

Sofern in diesem Zusammenhang von einem Raum die Rede ist, dessen Stellventil den höchsten Öffnungsgrad aufweist, so ist dieser Raum als Führungsraum anzusehen. Im Gegensatz zu konventionellen Regelungen für Heizsysteme, die mit einem festen Führungsraum, zum Beispiel dem Wohnzimmer, arbeiten, bestimmt das erfindungsgemäße Verfahren den Führungsraum dynamisch. So kann beispielsweise an sonnigen Tagen automatisch ein anderer Führungsraum gewählt werden als an bewölkten Tagen. Sobald der Führungsraum festliegt, ist das Ausführen des Schritts (f) für diesen Raum nicht erforderlich und kann ausgelassen werden.

Die Steuergeräte der Räume erfassen entweder durch eine Verbindung mit der übergeordneten Steuerung oder dem Heizgerät bzw. mit Hilfe von Druck- oder Massenstromsensoren, ob erwärmtes Wärmeträgermedium bereitgestellt wird.

Unter Heizgerät wird in diesem Zusammenhang jede Art von Wärmequelle verstanden, die geeignet ist, ein Gebäude zu beheizen. Dies kann beispielsweise neben einem konventionellen Heizgerät auf der Basis der Verbrennung von Brennstoff auch eine Wärmepumpe, ein KWK-System oder ein Anschluss an ein Fernwärmesystem sein. Unter Räumen werden bevorzugt geschlossene Räume verstanden, erfindungsgemäß können dies auch Zonen in einem größeren Raum oder Gebäude sein. Unter Heizkörper wird erfindungsgemäß jede Art eines Wärmeübertragers verstanden, insbesondere Radiator, Fußbodenheizung, Wandheizung, Deckenheizung.

Der Vorteil der Erfindung ist, dass nach der Installation und Inbetriebnahme und nach einer gewissen Betriebsdauer das Verfahren automatisch die bestmögliche Betriebsweise des Wärmeerzeugers bei voller Einhaltung der Temperaturkomfortkriterien findet. Dabei erfolgt im Prinzip automatisch die hydraulische Feinabstimmung des Heizungsnetzes. Der statische hydraulische Abgleich, der vom Fachhandwerker aufwendig durchgeführt werden muss, kann entfallen.

Getrieben wird die Wärmezufuhr in den Raum durch den Start des Heizgeräts. Anhand der Information über die Entwicklung der Raumtemperatur, gemessen am Temperatursensor, kann auf Systemebene erkannt werden, wie viel Wärme (Temperaturerhöhungsgeschwindigkeit) der Wärmeerzeuger in den Raum transportiert hat. Bei einem Vergleich der Entwicklung der Raumtemperaturen über die Räume hinweg zeigt sich, welche Räume schneller, welche langsamer bzw. träger reagieren.

Erfindungsgemäß wird einer der Räume (z.B. der trägste Raum) zum Führungsraum. Alle anderen Räume werden durch Androsselung der Heizkörperventile diesem Raum angeglichen. Dies erfolgt nicht schlagartig, sondern von Zyklus zu Zyklus. Hierbei kann der Zyklus tatsächlich durch das Ab- und wieder An-Schalten des Wärmeerzeugers (taktender Betrieb) oder zeitlich ausgelöst definiert sein (kontinuierlicher Betrieb).

Auf Raumebene sind nach wie vor Einzelraumtemperaturregler realisiert, die Störgrößen (intern und extern) ausregeln und bei Bedarf die Regler auf Systemebene dominieren.

Bei idealer Betrachtung erfolgt keine klassische Einzelraumtemperaturregelung mehr, sondern eine direkte Leistungsregelung des Erzeugers auf die Raumtemperaturen. Die Hauptaufgabe der Einzelraumregelung ist dann die korrekte Verteilung dieser Leistung auf die unterschiedlichen Heizflächen bzw. Räume.

Mit diesem Verfahren lassen sich folgende Vorteile realisieren:
- Optimierung des zyklischen Wärmeerzeugerbetriebs:
   Wenn der Wärmebedarf des Gebäudes in Summe kleiner ist als die minimale, untere Modulationsleistung des Heizgerätes und das System dadurch zwangsläufig taktet. Dabei werden Raumkapazitäten durch Zulassen des Temperaturkomfortbands derart genutzt, dass ein einziger Takt ausreicht, um alle Räume auf Temperatur zu bringen. Einzelne Anforderungen von Einzelräumen werden reduziert. (Leistungsbündelung, Übereinanderlegen von Bedarfen)
- Optimierung des kontinuierlichen Betriebs:
   Sobald der Wärmebedarf des Gebäudes größer ist als die minimale Modulationsleistung des Wärmeerzeugers. Das Regelverfahren wechselt sofort vom taktenden Betrieb in den kontinuierlichen Betrieb wenn dies möglich ist, um möglichst lange kontinuierliche Heizzyklen zu generieren, in denen die Leistungsreglung in der Lage ist sich dem aktuellen Bedarf direkt anzunähern.
- Durch die Harmonisierung der Einzelraumwärmebedarfe ist es möglich, die Charakteristik des Wärmeerzeugers voll auszunutzen, bzw. das Aufheizverhalten auf die effizienzoptimalen Leistungsmerkmale eines Erzeugers abzustimmen.
- Minimal mögliche Systemtemperaturen im Heizungsnetz:
   Die Höhe liegt nicht mehr an der Parametrierung des Brennwertgerätes sondern an der Auslegung des hydraulischen Netzes und den Heizflächen und ist somit dann für das individuelle System minimal und kann aus regelungstechnischer Sicht nicht mehr weiter beeinflusst werden.
- Einhaltung der Komforttemperatur ist oberstes Ziel:
   Die Optimierung der Effizienz kann jederzeit durch die Einzelraumregler dominiert werden.
- Automatischer hydraulischer Abgleich:
   Die Beeinflussung des Volumenstroms eines jeden Heizkörpers durch öffnen und schließen,
   um Raumreaktionen einander anzugleichen, entspricht einer statischen hydraulischen Einstellung, mit dem Vorteil, dass diese nun nicht durch den Fachhandwerker vorgenommen werden muss und damit entsprechend anfällig ist, sondern sich aus den tatsächlichen Gegebenheiten des Gebäudes, der Hydraulik etc. automatisch ergibt.
- Einzelraumtemperaturregelung:
   Realisierung einer Einzelraumtemperaturregelung mit Vorgabe von Sollwertprofilen
- "Plug and Play" Installation für den Fachhandwerker:
   Der keinerlei Parametrierung am Brennwertgerät durchführen muss. Nur Inbetriebnahme durch Zuordnung der Sensoren und Aktoren zu Räumen und Vorgabe von Solltempertaturprofilen.
- Der klassische statische Abgleich muss nicht mehr durchgeführt werden, da durch die Verknüpfung des Einzelraumregelkreises und des Gebäude-Erzeugerregelkreises die Drosselfunktion der Heizkörperventile übergeordnet zur Verfügung steht.

Die Erfindung wird nun anhand der Figuren detailliert erläutert.

Es stellen dar:
Figur 1: Ein erfindungsgemäßes Heizsystem,
Figur 2: den zeitlichen Verlauf der Raumtemperatur und der zugeführten Wärmeleistung eines Raumes aus Figur 1 bei einem Öffnungsgrad des Stellventils von 100 % und 60 %,
Figur 3: den zeitlichen Verlauf der Raumtemperatur, des Stellgrads und der zugeführten Wärmeleistung zweier Räume aus Figur 1 im nicht synchronisierten Zustand,
Figur 4: den zeitlichen Verlauf der Raumtemperatur, des Stellgrads und der zugeführten Wärmemenge zweier Räume aus Figur 1 im synchronisierten Zustand.

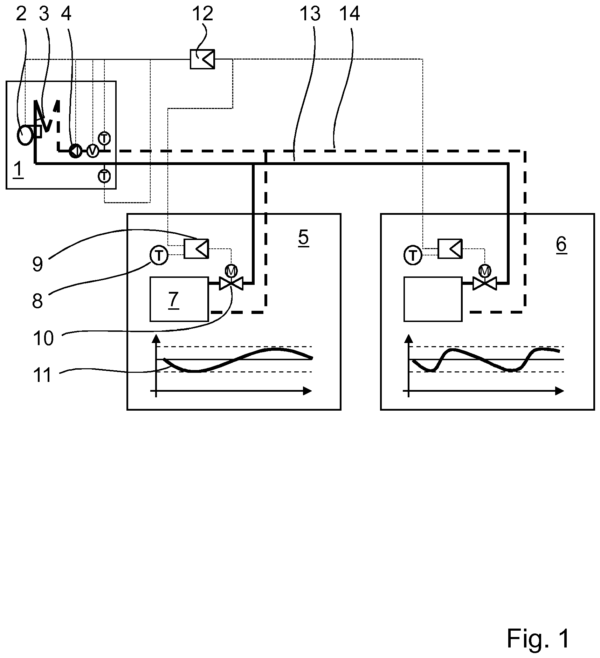

Figur 1 zeigt ein erfindungsgemäßes Heizsystem zum Beheizen von Räumen 5, 6. Das Heizsystem umfasst ein Heizgerät 1, welches einen Brenner 2 zum Erzeugen von Wärme, einen Primärwärmetauscher 3 zum Übertragen der Wärme auf einen Heizkreislauf mit einem Wärmeträgermedium und einer Umwälzpumpe 4 zum Fördern des Wärmeträgermedium im Heizkreislauf beinhaltet. An den Heizkreislauf sind mehrere Räume 5, 6 angeschlossen, die durch das Heizsystem erwärmt werden. Jeder der Räume umfasst zumindest ein Heizkörper 7, welcher an dem Heizkreislauf angeschlossen ist. Ein Temperatursensor 8 erfasst die Raumtemperatur, ein Stellventil 10 drosselt den Durchfluss des Wärmeträgermedium durch den Heizkörper 7. Der Raum 6 repräsentiert einen oder mehrere weitere Räume. Anhand der in dem jeweiligen Raum dargestellten Temperaturverlaufskurve 11, welche den Verlauf der Temperatur über der Zeit darstellen, lässt sich erkennen, dass die Aufheiz- und Abkühlzeiten der Räume sehr unterschiedlich sind. So heizt sich Raum 6 beim Beheizen schneller auf als der Raum 5. Ein übergeordnetes Steuergerät 12 ist vorgesehen, um die Schritte des erfindungsgemäßen Verfahrens zu koordinieren.

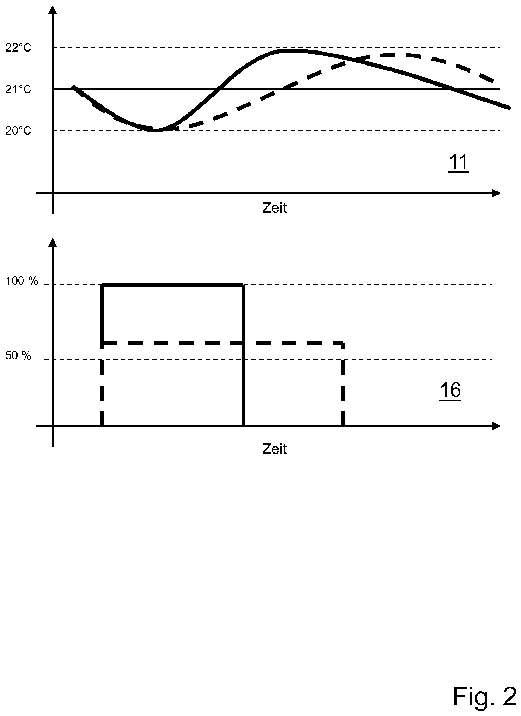

In Figur 2 ist noch einmal die Temperaturverlaufskurve 11 eines Raumes sowie die Wärmeleistungsverlaufskurve 16 über der Zeit dargestellt. Als oberer und unterer Schwellenwert sind hier 20 °C bzw. 22 °C angegeben. Zunächst werden die mit einer durchgezogenen Linie dargestellten Kurven beschrieben. Es ist zu erkennen, dass nach einer Zuführung einer Wärmeleistung der Verlauf der Temperatur mit einer zeitlichen Verzögerung ansteigt bis der obere Schwellenwert erreicht wird. Anschließend wird die Wärmeleistung auf 0 % reduziert und der Raum kühlt ab, bis auch der untere Schwellenwert erreicht ist, woraufhin die Wärmeleistung wieder zugeführt wird und sich der Vorgang wiederholt. Durch Berücksichtigung des aktuellen Temperaturwerts und des Gradienten kann ein Überschwingen der Temperatur über die Schwellenwerte verhindert werden. Der Anstieg ist relativ steil und entspricht dem Verlauf der Kurve in Raum 6 in Figur 1. Sobald die Wärmeleistung auf 0 % reduziert wird, fällt die Temperatur mit einer zeitlichen Verzögerung wieder ab. Die gestrichelte Kurve stellt den Fall dar, dass die Wärmeleistung auf 60 % reduziert ist. Es ist zu erkennen, dass der Gradient der Temperaturverlaufslinie im ansteigenden Bereich kleiner ist, während er im abfallenden Bereich gleich ist. Gemäß dem Stand der Technik stellt sich im getakteten Zustand für jeden Raum eine unterschiedliche Frequenz ein. Figur 2 zeigt, dass durch Reduzierung der Wärmeleistung die Frequenz für jeden Raum individuell verändert werden kann.

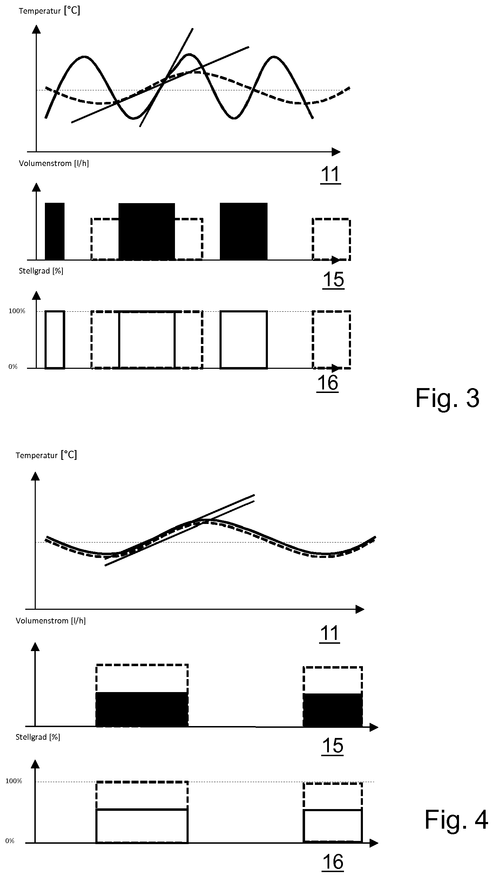

Dies ist in Figur 3 und Figur 4 noch einmal genauer dargestellt. Zusätzlich zu der Wärmeleistung 16 ist auch der Stellgradverlauf 15 im unsynchronisierten Zustand in Figur 3 und im synchronisierten Zustand in Figur 4 dargestellt. Dabei ist der gestrichelte Kurvenverlauf beispielsweise dem Raum 5 zuzuordnen, während der durchgezogene Kurvenverlauf in beiden Figuren dem Raum 6 zugeordnet ist. Es ist zu erkennen, dass durch Reduzierung des Stellgrads die Frequenz des Kurvenverlaufs der durchgezogenen Linie an die Frequenz der gestrichelten Linie angepasst werden kann. Die Einzelheiten des Verfahrens sind in den Ansprüchen und in den Erläuterungen zu den Ansprüchen ausgeführt.

### Bezugszeichenliste

- 1: Heizgerät
- 2: Brenner
- 3: Primärwärmetauscher
- 4: Umwälzpumpe
- 5: Raum
- 6: weitere Räume
- 7: Heizkörper
- 8: Temperatursensor
- 9: Steuergerät
- 10: Stellventil
- 11: Temperaturverlaufskurve
- 12: übergeordnete Steuereinheit
- 13: Vorlauf
- 14: Rücklauf
- 15: Stellgradverlaufskurve
- 16: Wärmeleistungsverlaufskurve

## Patentansprüche

1. Verfahren zum Regeln der Temperatur mehrerer von einem Heizsystem beheizten Räumen, wobei das Heizsystem zumindest ein Heizgerät (1) zum Erwärmen eines Wärmeträgermediums, mehrere in mehreren Räumen vorgesehene Heizkörper (7) und ein Verteilsytem (13, 14) zum Verteilen der Wärme auf die Räume (5, 6) umfasst, und wobei jedem zu regelnden Raum (5, 6) ein Temperatursensor (8) zum Messen der Raumtemperatur, ein Stellventil (10) zum Vorgeben eines Wärmeträger-Massenstroms durch den Heizkörper (7) und ein Steuergerät (9) zugeordnet ist, mit den zyklischen Verfahrensschritten
(a) Anfordern von Wärme durch einen Raum (5, 6), sobald die Raumtemperatur in diesem Raum einen unteren Schwellenwert unterschritten hat,
(b) Betreiben des Heizgerätes (1) und Bereitstellen von erwärmtem Wärmeträgermedium als Reaktion, sobald einer der Räume (5, 6) Wärme angefordert hat, wobei die Stellventile (10) aller Räume mit einem individuellen Öffnungsgrad geöffnet sind,
(c) Rücknahme der Anforderung durch den Raum (5, 6), sobald die Raumtemperatur in diesem Raum einen oberen Schwellenwert überschritten hat,
(d) Unterbrechen des Betreibens des Heizgerätes (1) und der Bereitstellung von erwärmtem Wärmeträgermedium, sobald alle Räume (5, 6) die Anforderung der Wärme zurückgenommen haben,
(e) sofern die Temperatur eines Raumes (5, 6) den oberen Schwellenwert überschritten hat, aber weiter erwärmtes Wärmeträgermedium bereitgestellt wird: Schließen des Stellventils dieses Raumes solange weiter erwärmtes Wärmeträgermedium bereitgestellt wird,
(f) Für jeden Raum (5, 6): Nach dem Unterbrechen der Bereitstellung von erwärmtem Wärmeträgermedium das Wärmemengenverhältnis der zum Erreichen des oberen Schwellenwertes benötigten Wärmemenge zu der von durch das Wärmeträgermedium bereitgestellter Wärmemenge ermitteln und den Öffnungsgrad des Stellventils (10) in Abhängigkeit vom Wärmemengenverhältnis vorgeben, **dadurch gekennzeichnet, dass**
weiterhin (g) das Taktverhältnis aus der Einschaltzeit zwischen Schritt (a) und Schritt (d) zu der Ausschaltzeit zwischen Schritt (d) und Schritt (a) des nächsten Zyklus bestimmt wird und die Leistung des Heizgeräts (1) solange reduziert wird, bis die minimale Leistung erreicht ist, die vom Heizgerät (1) kontinuierlich abgegeben werden kann, ohne dass dabei die Ausschaltzeit 0 ist, oder bis die Ausschaltzeit 0 ist, und wobei solange die Ausschaltzeit 0 ist im Schritt (b) zusätzlich die Leistung des Heizgeräts (1) so geregelt wird, dass die Temperatur des Raumes (5, 6), dessen Stellventil (10) den größten Öffnungsgrad aufweist, zwischen dem oberen und den unteren Schwellenwert ist.

2. Verfahren nach Anspruch 1, wobei im Schritt (f) das Wärmemengenverhältnis durch das Verhältnis der Zeit, bis die Temperatur den oberen Schwellenwert erreicht hat zu Dauer der Bereitstellung des erwärmten Wärmeträgermediums bestimmt wird.

3. Verfahren nach Anspruch 1 oder 2, wobei im Schritt (f) der ermittelte Öffnungsgrad des Stellventils (10) stetig mit dem Wärmemengenverhältnis zunimmt, bevorzugt proportional zum Wärmemengenverhältnis ist.

4. Verfahren nach einem der Ansprüche 1 bis 3, wobei der Schritt (f) durch das Steuergerät (9) des jeweiligen Raumes durchgeführt wird.

5. Verfahren nach einem der Ansprüche 1 bis 3, wobei das Heizsystem eine übergeordnete Steuereinheit (12) umfasst und wobei der Schritt (f) durch die übergeordnete Steuereinheit(12) durchgeführt wird.

6. Verfahren nach einem der Ansprüche 1 bis 5, wobei in dem Fall, in dem die Leistung solange reduziert wird, bis die Ausschaltzeit 0 ist, im Schritt (b) die Leistung des Heizgeräts (1) nicht unter die Leistung abgesenkt wird, die vom Heizgerät (1) kontinuierlich abgegeben werden kann.

7. Verfahren nach einem der Ansprüche 1 bis 6, wobei die Leistung des Heizgeräts (1) solange erhöht wird, wie Ausschaltzeit 0 ist und die die Temperatur des Raumes (5, 6), dessen Stellventil (10) den größten Öffnungsgrad aufweist, unterhalb des unteren Schwellenwertes ist.

## Claims

1. Method for controlling the temperature of multiple rooms heated by a heating system, wherein the heating system comprises at least one heating device (1) for heating a heat carrier medium, multiple radiators (7) provided in multiple rooms and a distribution system (13, 14) for distributing the heat to the rooms (5, 6), and wherein a temperature sensor (8) for measuring the room temperature, a control valve (10) for defining a heat carrier mass flow through the radiator (7) and a control device (9) is associated with each room (5, 6) to be controlled, with the cyclic method steps
(a) requesting heat by a room (5, 6) as soon as the room temperature in this room falls below a lower threshold value,
(b) operating the heating device (1) and providing heated heat carrier medium in response as soon as one of the rooms (5, 6) has requested heat, wherein the control valves (10) of all rooms are opened to an individual degree of opening,
(c) withdrawing the request by the room (5, 6) as soon as the room temperature in this room has exceeded an upper threshold value,
(d) interrupting operation of the heating device (1) and providing heated heat carrier medium as soon as all rooms (5, 6) have withdrawn the request for heat,
(e) if the temperature of a room (5, 6) has exceeded the upper threshold value, but heated heat carrier medium is still being provided: closing the control valve of this room as long as heated heat carrier medium is being provided,
(f) for each room (5, 6): after interrupting the provision of heated heat carrier medium, determining the heat quantity ratio of the heat quantity required to reach the upper threshold value and the heat quantity provided by the heat carrier medium, and defining the degree of opening of the control valve (10) in dependence on the heat quantity ratio, **characterized in that** further (g) the cycle ratio of the activation time between step (a) and step (d) and the deactivation time between step (d) and step (a) of the next cycle is determined and output of the heating device (1) is reduced until the minimum output is reached that can continuously be provided by the heating device (1), without the deactivation time being 0, or until the deactivation time is 0, and wherein, while the deactivation time is 0, in step (b) the output of the heating device (1) is further controlled such that the temperature of the room (5, 6), in which the control valve (10) has the largest degree of opening, lies between the upper and the lower threshold value.

2. Method according to claim 1, wherein in step (f) the heat quantity ratio is determined by the ratio of time until the temperature has reached the upper threshold value and duration of the provision of the heated heat carrier medium.

3. Method according to claim 1 or 2, wherein in step (f) the determined degree of opening of the control valve (10) continually increases with the heat quantity ratio, preferably is proportional to the heat quantity ratio.

4. Method according to any of claims 1 to 3, wherein step (f) is carried out by the control device (9) in each respective room.

5. Method according to any of claims 1 to 3, wherein the heating system comprises a supervisory control unit (12) and wherein step (f) is carried out by the supervisory control unit (12).

6. Method according to any of claims 1 to 5, wherein in the event that the output is reduced until the deactivation time is 0, in step (b) the output of the heating device (1) is not reduced below the output that can continuously be provided by the heating device (1).

7. Method according to any of claims 1 to 6, wherein the output of the heating device (1) is increased as long as the deactivation time is 0 and the temperature of the room (5, 6), in which the control valve (10) has the largest degree of opening, is below the lower threshold value.

## Revendications

1. Procédé de réglage de la température de plusieurs espaces chauffés par un système de chauffage, dans lequel le système de chauffage comprend au moins un appareil de chauffage (1) pour le chauffage d'un milieu caloporteur, plusieurs corps de chauffe (7) prévus dans plusieurs espaces et un système de distribution (13, 14) pour la distribution de la chaleur aux espaces (5, 6), et dans lequel un capteur de température (8) pour la mesure de la température ambiante, une soupape de réglage (10) pour la prédéfinition d'un flux massique de caloporteur à travers le corps de chauffe (7) et un appareil de commande (9) sont attribués à chaque espace (5, 6) à régler, avec les étapes de procédé cycliques de
(a) demande de chaleur par un espace (5, 6), dès lors que la température ambiante dans cet espace est inférieure à une valeur de seuil inférieure,
(b) fonctionnement de l'appareil de chauffage (1) et mise à disposition de milieu caloporteur chauffé en réaction, dès qu'un des espaces (5, 6) a demandé de la chaleur, dans lequel les soupapes de réglage (10) de tous les espaces sont ouvertes avec un degré d'ouverture individuel,
(c) annulation de la demande par l'espace (5, 6), dès que la température ambiante dans cet espace a dépassé une valeur de seuil supérieure,
(d) interruption du fonctionnement de l'appareil de chauffage (1) et de la mise à disposition de milieu caloporteur chauffé, dès que tous les espaces (5, 6) ont annulé la demande de chaleur,
(e) si la température d'un espace (5, 6) a dépassé la valeur de seuil supérieure, mais que le milieu caloporteur chauffé continue d'être mis à disposition : fermeture de la soupape de réglage de cet espace aussi longtemps que du milieu caloporteur chauffé continue d'être mis à disposition,
(f) pour chaque espace (5, 6) : après l'interruption de la mise à disposition de milieu caloporteur chauffé, détermination du rapport de quantité de chaleur entre la quantité de chaleur nécessaire pour atteindre la valeur de seuil supérieure et la quantité de chaleur mise à disposition par le milieu caloporteur et prédéfinition du degré d'ouverture de la soupape de réglage (10) en fonction du rapport de quantité de chaleur, **caractérisé en ce qu'**en outre (g) le rapport de cadence est déterminé à partir du temps de marche entre l'étape (a) et l'étape (d) par rapport au temps d'arrêt entre l'étape (d) et l'étape (a) du prochain cycle et la puissance de l'appareil de chauffage (1) est réduite jusqu'à ce que la puissance minimum, qui peut être émise en continu par l'appareil de chauffage (1), soit atteinte, sans que ce faisant le temps d'arrêt soit 0, ou jusqu'à ce que le temps d'arrêt soit 0, et dans lequel aussi longtemps que le temps d'arrêt est 0, dans l'étape (b) la puissance de l'appareil de chauffage (1) est réglée en plus de façon que la température de l'espace (5, 6), dont la soupape de réglage (10) présente le plus grand degré d'ouverture, soit entre la valeur de seuil supérieure et la valeur de seuil inférieure.

2. Procédé selon la revendication 1, dans lequel dans l'étape (f), le rapport de quantité de chaleur est déterminé par le rapport entre le temps jusqu'à ce que la température ait atteint la valeur de seuil supérieure et la durée de la mise à disposition du milieu caloporteur chauffé.

3. Procédé selon la revendication 1 ou 2, dans lequel dans l'étape (f), le degré d'ouverture déterminé de la soupape de réglage (10) augmente en continu avec le rapport de quantité de chaleur, de préférence proportionnellement au rapport de quantité de chaleur.

4. Procédé selon l'une quelconque des revendications 1 à 3, dans lequel l'étape (f) est réalisée par l'appareil de commande (9) de l'espace respectif.

5. Procédé selon l'une quelconque des revendications 1 à 3, dans lequel le système de chauffage comprend une unité de commande supérieure (12) et dans lequel l'étape (f) est réalisée par l'unité de commande supérieure (12).

6. Procédé selon l'une quelconque des revendications 1 à 5, dans lequel dans le cas, dans lequel la puissance est réduite jusqu'à ce que le temps d'arrêt soit 0, dans l'étape (b) la puissance de l'appareil de chauffage (1) n'est pas abaissée au-dessous de la puissance qui peut être émise en continu par l'appareil de chauffage (1).

7. Procédé selon l'une quelconque des revendications 1 à 6, dans lequel la puissance de l'appareil de chauffage (1) est augmentée jusqu'à ce que le temps d'arrêt soit 0 et la température de l'espace (5, 6), dont la soupape de réglage (10) présente le plus grand degré d'ouverture, soit inférieure à la valeur de seuil inférieure.
